# EUROPÄISCHE PATENTANMELDUNG

(11) **EP 2 371 422 A1**
(43) Veröffentlichungstag der Anmeldung: **05.10.2011**
(21) Anmeldenummer: 11170923.4
(22) Anmeldetag: 11.08.2008
(51) Int. Cl.: A62C 2/18, F16K 3/02, G21C 9/04

(54) **Schutzvorrichtung für Lüftungskanäle**

(30) Priorität: 03.09.2007 CH 13742007
(62) Teilanmeldung aus: 08405194.5
(71) Anmelder: Gasser, Erwin, 3123 Belp (CH)
(72) Erfinder: Gasser, Erwin, 3123 Belp (CH)
(74) Vertreter: AMMANN PATENTANWÄLTE AG BERN

(57) **Zusammenfassung**

Die Erfindung betrifft eine Schutzvorrichtung (10) für Lüftungskanäle, bei welchen mindestens eine Kanalöffnung (6, 7) zur Luftzuführung und/oder -abführung vorgesehen ist, insbesondere zur Brandabschottung von Klimatisierungsräumen für informationstechnische Einrichtungen oder von Tunneln bzw. Tunnelkonstruktionen oder zur Brand- und/oder Strahlungsabschottung in Kernkraftwerken, und eine Schutzwand mit mindestens einer derartigen Schutzvorrichtung (10).

Zur Notfallabschottung zwischen den Schutzabschnitten wird vorgeschlagen, dass die Schutzvorrichtung (10) mindestens einen Schutzschieber (11, 12) aufweist, der in vertikaler Richtung verschiebbar gelagert ist, und weiterhin einen Schiebemechanismus (15) umfasst, mittels welchem der Schutzschieber (11, 12) von einer Offenstellung (SO) in eine Verschlussstellung (SV) der Kanalöffnung (6, 7) überführbar ist, wobei die Kanalöffnung (6, 7) in der Verschlussstellung (SV) vollständig von dem Schutzschieber (11, 12) abgedeckt ist.

## Beschreibung

Die Erfindung betrifft eine Schutzvorrichtung gemäss dem Oberbegriff von Patentanspruch 1 sowie eine Schutzwand mit mindestens einer derartigen Schutzvorrichtung.

Rechenzentren, Schaltzentralen und andere Stellplätze für elektronische Komponenten benötigen lüftungstechnische Anlagen, die konditionierte Zu- und Rückluft zur Kühlung der darin befindlichen Komponenten zur Verfügung stellen. Da derartige Umluftkühlgeräte ein hohes Risiko an Brand- und Rauchgaslasten für die hochsensiblen Komponenten darstellen ist deren Abschottung vom eigentlichen Stellplatz der Komponenten in einem autarken Brandabschnitt üblich. Um die Übertragung von Feuer und Rauch in andere Brandabschnitte zu verhindern, werden Schutzvorrichtungen eingesetzt.

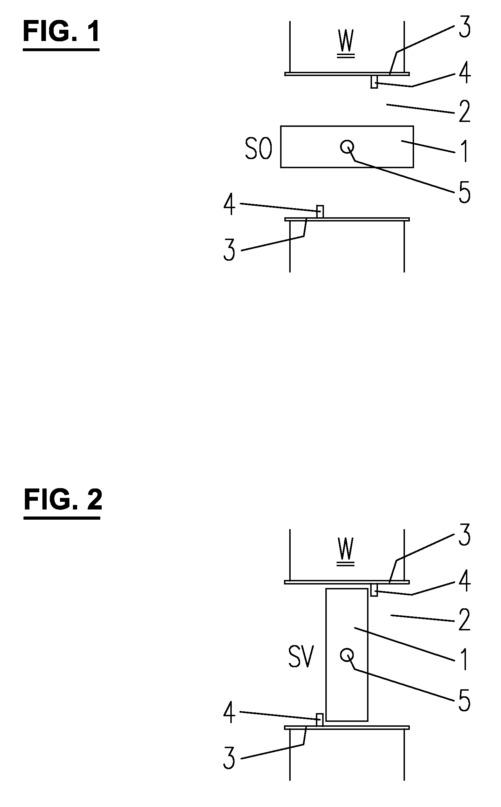

Derartige Schutzvorrichtungen sind herkömmlicherweise durch mit Federkraft betriebene Brandschutzklappen ausgestattet, die im Normalbetrieb der Lüftungsanlage in Längsrichtung des Strömungsweges der Zu- bzw. Rückluft stehen und die um eine Querachse zum Strömungsweg rotierbar sind, sodass der luftführende Querschnitt im Brandfall verschliessbar ist. Die Funktionsweise einer solchen Brandschutzklappe im Normalbetrieb und im Brandfall ist in der Fig. 1 bzw. Fig. 2 schematisiert.

Jedoch ist eine hochwertige Brandabschottung, wie sie beispielsweise einer gängigen Sicherheitsnorm gemäss EN1047-2 entspricht, mit solchen Schutzvorrichtungen nicht realisierbar. Denn einerseits müssen hierzu die Brandschutzklappen eine gewisse Mindestdicke aufweisen. Die Klappendicke wirkt jedoch limitierend auf den abgedeckten Lüftungsquerschnitt im Brandfall, da die Klappenlänge so gewählt sein muss, dass beim Rotieren der Brandschutzklappe ein Anecken an den Lüftungskanal vermieden ist. Eine Luftdichtigkeit ist damit nicht gewährleistet und durch die verbleibenden Leckströme in der Verschlussstellung der Brandschutzklappe ist der Feuerwiderstandswert stark reduziert. Andererseits generiert auch der nicht abgedeckte wärmeleitende Metallrahmen des Lüftungskanals einen unerwünscht guten Wärmeübergang zwischen den isolierten Brandabschnitten.

Hiervon ausgehend liegt der Erfindung die Aufgabe zugrunde, eine Schutzvorrichtung der eingangs genannten Art zu schaffen, durch welche unter Vermeidung zumindest einer der vorgenannten Nachteile eine ausgezeichnete Brandabschottung zwischen den Brandabschnitten gewährleistet ist.

Die genannte Aufgabe wird durch eine Schutzvorrichtung gemäss Patentanspruch 1 gelöst.

Erfindungsgemäss wird also ein vertikal verschiebbarer Schutzschieber vorgeschlagen, durch welchen im Brandfall eine vollständige Abdeckung des luftführenden Kanalquerschnitts erzielt werden kann, sodass eine Übertragung von Feuer und Rauch in einen angrenzenden Brandabschnitt wirkungsvoll vermieden ist.

Bevorzugt weist ein derartiger Schutzschieber eine hochgradig brandisolierende Materialzusammensetzung auf, die gegebenfalls von einem rostfreien Stahlrahmen umfasst ist. Dies wiederum bedingt eine hohe Gewichtslast, die es bei der vertikalen Bewegung des Schutzschiebers in dessen Verschlussstellung zu überwinden gilt. Hierzu sind herkömmliche Antriebseinrichtungen, wie sie in Schutzvorrichtungen zum Einsatz kommen, nicht in der Lage.

Zur Lösung dieses technischen Problems wird erfindungsgemäss ein Kompensationselement gemäss Patentanspruch 2 vorgeschlagen. Das Gewicht des Kompensationselements entspricht dabei mindestens der Hälfte des Gewichts des Schutzschiebers oder kann über dessen Gewicht hinausgehen. Dadurch wird eine Gewichtskompensation des Schutzschiebers erreicht, so dass nur ein vergleichsweise geringer Kraftaufwand zu dessen Überführung in die Verschlussstellung notwendig ist.

In bevorzugter Ausführung gemäss Patentanspruch 3 ist das Kompensationselement durch einen weiteren Schutzschieber gebildet.

Ein anderes bevorzugtes Einsatzgebiet der erfindungsgemässen Schutzvorrichtung besteht im Brandschutz von Tunneln bzw. beim Tunnelbau oder in der Brand- und/oder Strahlungsabschottung in Kernkraftwerken, wobei ein Grossteil des Schutzschiebers jeweils aus strahlungsabsorbierendem Material besteht.

Vorzugsweise besteht ein Grossteil des Schutzschiebers jeweils aus hochgradig brandisolierendem Material, vorzugsweise einer zementgebundenen Silikat-Brandschutzplatte. Zusätzlich oder alternativ besteht ein Grossteil des Schutzschiebers vorzugsweise jeweils aus strahlungsabsorbierendem Material, vorzugsweise einem bleihaltigen Metallgemisch. Der Schiebemechanismus ist bevorzugt im Wesentlichen aus rostfreiem Stahl gebildet.

Weitere bevorzugte Ausführungsformen der Erfindung sind jeweils durch die übrigen abhängigen Patentansprüche definiert.

Nachfolgend ist die Erfindung anhand einer bevorzugten Ausführungsform unter Bezugnahme auf die Zeichnungen näher erläutert, anhand welcher sich weitere Eigenschaften und Vorteile der Erfindung ergeben. Die Figuren, die Beschreibung und die Ansprüche enthalten zahlreiche Merkmale in Kombination, die der Fachmann auch einzeln betrachten und zu sinnvollen weiteren Kombinationen zusammenfassen wird. Dabei zeigen:
- Fig. 1:: eine schematische Seitenansicht einer herkömmlichen Brandschutzklappe in einer Offenstellung;
- Fig. 2:: die in Fig. 1 gezeigte herkömmliche Brandschutzklappe in einer Verschlussstellung;
- Fig. 3:: eine Vorderansicht einer erfindungsgemässen Schutzvorrichtung mit Schutzschiebern in einer Offenstellung;
- Fig. 4:: die in Fig. 3 gezeigte erfindungsgemässe Schutzvorrichtung in einer Seitenansicht;
- Fig. 5:: eine Vorderansicht der in Figg. 3 und 4 gezeigten erfindungsgemässen Schutzvorrichtung mit den Schutzschiebern in einer Verschlussstellung;
- Fig. 6:: die in Fig. 5 gezeigte erfindungsgemässe Schutzvorrichtung in einer Seitenansicht; und
- Fig. 7:: die in Figg. 3 und 4 gezeigte erfindungsgemässe Schutzvorrichtung mit den Schutzschiebern in einer Offenstellung in einer perspektivischen Ansicht.

In den Figg. 1 und 2 ist die Funktionsweise einer herkömmlichen Brandschutzvorrichtung schematisch dargestellt. Diese weist eine Brandschutzklappe 1 auf, die im Innenraum eines Luftzuführ- oder Luftabführkanals 2 angeordnet ist, der als Durchgang in einer Wand W ausgebildet ist. Im Anschlussbereich des Kanals 2 an die Wand W ist ein Metallrahmen 3 vorgesehen, an dessen Ober- bzw. Unterseite jeweils ein Stopperglied 4 in den Kanal 2 hineinragt. Entlang der Mittellinie der Brandschutzklappe 1 erstreckt sich eine horizontale Schwenkachse 5, um welche die Brandschutzklappe 1 rotierbar gelagert ist.

In der in Fig. 1 gezeigten Position befindet sich die Brandschutzklappe 1 in einer Offenstellung SO, in welcher die grossflächigen Klappenseiten in Richtung der Wanddicke der Wand W verlaufen. Dies entspricht der Durchgangsrichtung der Luft im Normalbetrieb der Lüftungsanlage, sodass eine Luftzirkulation durch den Kanal 2 möglich ist. Im Brandfall wird die Brandschutzklappe 1 von der Offenstellung SO in eine Verschlussstellung SV überführt, wie sie in Fig. 2 dargestellt ist. Durch ein Stopperglied 4 wird die Brandschutzklappe 1 in der Verschlusstellung SV gehalten. In der Verschlussstellung SV erstrecken sich die grossflächigen Seiten der Brandschutzklappe 1 parallel zu den Seitenflächen der Wand W, sodass ein Grossteil des Kanaldurchmessers 2 durch die Brandschutzklappe 1 abgedeckt ist, wodurch ein möglicher Luftaustausch durch den Kanal 2 stark reduziert ist.

Jedoch ist in der Verschlussstellung SV keine vollständige Luftdichtigkeit durch die Brandschutzklappe 1 gewährleistet. Denn eine Wandgängigkeit der Brandschutzklappe 1 in der Verschlussstellung SV ist technisch nicht realisierbar, da ein Anecken der kleinflächigen Seiten der Brandschutzklappe 1 an den Metallrahmen 3 im Laufe des Rotationsvorgangs vermieden werden muss, um in die Verschlussstellung SV zu gelangen. Einen weiteren Schwachpunkt einer solchen herkömmlichen Brandschutzvorrichtung stellt der wärmeleitende Metallrahmen 3 dar, durch welchen im Brandfall eine unerwünscht hohe Wärmeübertragung zwischen Brandherd auf der einen Wandseite und dem Schutzbereich auf der anderen Wandseite hervorgerufen wird. Nachteilig ist auch der verhältnismässig hohe Kraftaufwand, der zum Schliessen bzw. Öffnen der Brandschutzklappe 1 bei laufender Ventilation benötigt wird.

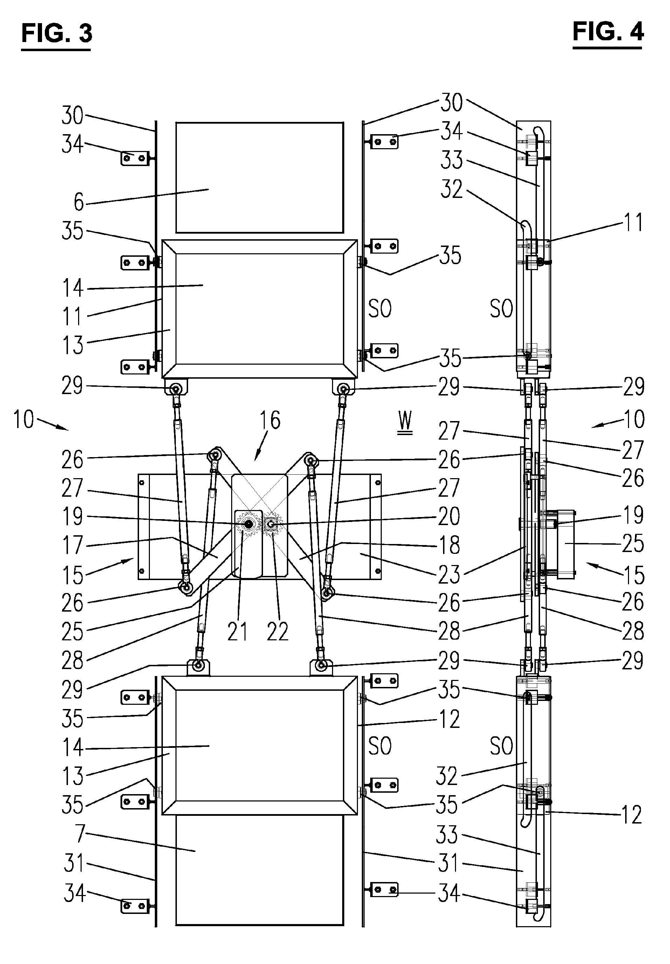

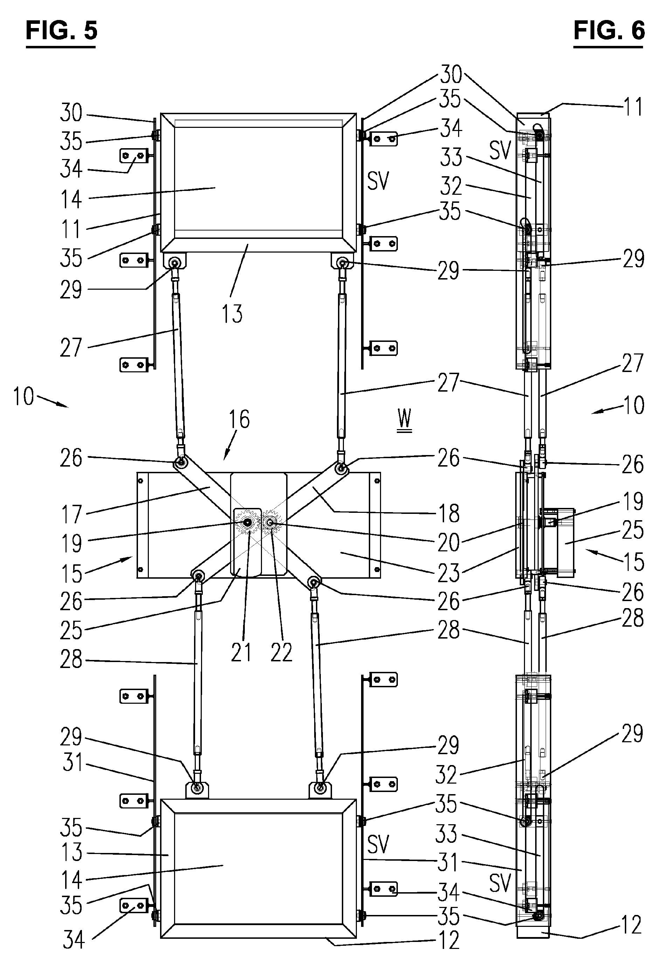

In Fig. 3 bzw. Fig. 5 ist eine erfindungsgemässe Schutzvorrichtung 10 in einer entsprechenden Offenstellung SO bzw. Verschlussstellung SV in einer Vorderansicht dargestellt. Dabei sind in der Wandfläche W eine rechteckförmige obere Kanalöffnung 6 zur Zuführung der im Aussenraum erwärmten Warmluft und eine identisch ausgebildete untere Kanalöffnung 7 zur Abführung der im Innenraum erzeugten Kaltluft vorhanden.

Die Schutzvorrichtung 10 umfasst einen oberen und unteren Schutzschieber 11 und 12 mit ebenfalls identisch ausgebildeter im Wesentlichen rechteckförmiger Oberfläche. Dabei weist jeder der Schutzschieber 11, 12 in seinem Randbereich einen Rahmen 13 auf, der aus rostfreiem Stahl besteht. In den Rahmen 13 ist jeweils eine Innenschicht 14 aus hochgradig isolierendem Brandschutzmaterial eingefasst. Als Brandschutzmaterial kann beispielsweise eine zementgebundene Silikat-Brandschutzplatte eingesetzt werden, trotz ihres hohen spezifischen Gewichtes in einem Bereich von ca. 400 bis 2000 kg/m³. Ein derart konstruierter Schutzschieber weist beispielsweise ein Gewicht von mindestens 10 kg auf, oder kann um ein Vielfaches darüber hinausgehen.

Die Oberfläche der Innenschicht 14 der Schutzschieber 11, 12 ist im Wesentlichen deckungsgleich mit den Kanalöffnungen 6, 7 oder ragt geringfügig über deren Seitenkanten hinaus, damit in der Verschlussstellung SV der Schutzschieber 11, 12 ein vollständiges Abdecken der Kanalöffnungen 6, 7 gewährleistet ist, wie in Fig. 5 ersichtlich ist.

In der Offenstellung SO, die in Fig. 3 dargestellt ist, befindet sich der obere Schutzschieber 11 unterhalb der oberen Kanalöffnung 6 und der untere Schutzschieber 12 oberhalb der unteren Kanalöffnung 7.

Zum Überführen der Schutzschieber 11, 12 von der Offenstellung SO in die Verschlussstellung SV im Brandfall ist im vertikalen Zwischenbereich zwischen den Schutzschiebern 11, 12 ein Schiebemechanismus 15 angeordnet. In dem Zentralbereich des Schiebemechanismus 15 ist eine Hebelanordnung 16 angeordnet, die zwei Hebel 17, 18 mit identischer geradliniger Form umfasst. Die Hebel 17, 18 überkreuzen sich in einem an ihren jeweiligen Schwenkachsen 19, 20 angrenzenden Bereich.

Die Schwenkachsen 19, 20 befinden sich im jeweiligen Mittelpunkt bezüglich der longitudinalen Erstreckungsrichtung der Hebel 17, 18. An den Schwenkachsen 19, 20 ist jeweils ein Zahnrad 21, 22 vorhanden, welches zwischen den Hebeln 17, 18 und einer Befestigungsplatte 23 angeordnet ist, an welcher die Schwenkachsen 19, 20 befestigt sind. Die Befestigungsplatte 23 ist starr mit der Wand W verbunden. Die Zahnräder 21, 22 sind nebeneinander angeordnet und greifen ineinander, sodass sie beim Verschwenken der Hebel 17, 18 zusammenwirken.

Über dem sich überkreuzenden Bereich der Hebel 17, 18 ist eine weitere Befestigungsplatte 24 montiert, auf welcher eine Aktivierungseinheit 25 befestigt ist. Die Aktivierungseinheit 25 greift an die linke Schwenkachse 19 an, sodass sie über die Zahnräder 21, 22 auch mit der rechten Schwenkachse 20 wirkverbunden ist. Im konkreten Fall ist die Aktivierungseinheit 25 durch einen
Federrücklaufantrieb realisiert, dessen Motor zum Aufziehen der Feder und dessen Federrücklauf zum Übertragen eines Drehmoments von ca. 10 - 20 Nm ausgebildet ist. In der Offenstellung SO der Schutzschieber 11, 12 befindet sich die Feder im angespanntem Zustand.

An den Endseiten der Hebel 17, 18 sind Gelenke 26 vorhanden, an welche jeweils eine Verbindungsstange angelenkt ist. Die zwei Verbindungsstangen 27 dienen zur Kraftübertragung auf den oberen Schutzschieber 11 und erstrecken sich von jeweils einem aussenseitig an dem Schutzschieber angeordneten Gelenk 29 zu den in der Offenstellung SO unteren hebelendseitigen Gelenken 26. Die beiden Verbindungsstangen 28 weisen an ihrem unteren Ende jeweils eine Gelenkverbindung 29 mit dem unteren Schutzschieber 12 auf, während sie an ihrem oberen Ende jeweils an die Hebelenden 17, 18 angelenkt sind, die sich in der Offenstellung SO der Schutzschieber 11, 12 oben befinden.

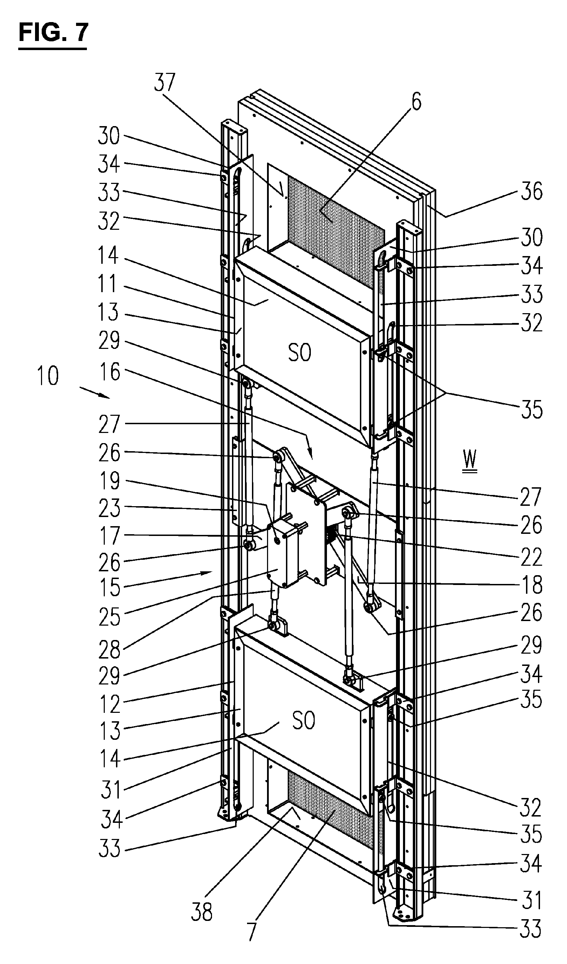

In den Seitenansichten in Fig. 4 und Fig. 6 und in der perspektivischen Darstellung in Fig. 7 ist die Lagerung der Schutzschieber 11, 12 entlang der Wandfläche W klarer ersichtlich. Entlang der vertikalen Seitenflächen des oberen Schutzschiebers 11 und des unteren Schutzschiebers 12 ist jeweils ein Führungschienenpaar 30, 31 angeordnet, dessen Gesamtlänge im Wesentlichen der doppelten vertikalen Schieberseitenlänge entspricht. Derart ist eine vertikale Verschiebbarkeit der Schutzschieber 11, 12 zwischen der Offenstellung SO und der Verschlussstellung SV gewährleistet.

In jeder Führungsschiene der Führungsschienenpaare 30, 31 sind zwei längliche, im Wesentlichen in vertikaler Richtung parallel zueinander verlaufende Durchbrüche vorhanden, die als Führungsschlitze 32, 33 fungieren. Die wandseitigen Führungsschlitze 32 erstrecken sich von der von der jeweiligen Kanalöffnung 6, 7 abgewandten Seite der Führungsschienenpaare 30, 31 bis in den Mittelbereich der Führungsschienen. Die vorderen Führungsschlitze 33 verlaufen von dem Mittelbereich der Führungsschienen 30, 31 bis zum entgegengesetzten Ende der Führungsschienen. Dabei wird lediglich der Mittelbereich der Führungsschienen von beiden Führungsschlitzen 32, 33 durchlaufen. Mittels jeweils dreier Befestigungsplättchen 34 sind die Führungsschienen mit der Wand W verschraubt.

Im oberen und unteren Endabschnitt der vertikalen Seitenflächen der Schutzschieber 11, 12 ist jeweils ein Führungsbolzen 35 bzw. 36 im oberen bzw. unteren Schutzschieber 11 bzw. 12 vorhanden, welcher in jeweils einen der Führungsschlitze 32, 33 eingreift. Der geradlinige Verlauf der Führungsschlitze 32, 33 ist in seinem oberen bzw. unteren Endabschnitt beim oberen bzw. unteren Führungsschienenpaar 30 bzw. 31 leicht abgeschrägt, um derart ein Heranführen der Führungsbolzen 35, 36 in Wandrichtung bis in die Verschlussstellung SV zu ermöglichen. Somit ist Reibungsfreiheit bei der Bewegung der Schutzschieber 11, 12 gewährleistet, da diese erst in der Verschlussstellung SV mit der Wand W in Kontakt treten.

Durch eine derart konstruierte Schutzvorrichtung 10 kann eine hervorragende Brandabschottung erreicht werden, welche über herkömmliche Sicherheitsnormen gemäss EN1047-2 bei weitem hinausgeht.

Die vorstehend beschriebene Schutzvorrichtung 10 kommt beispielsweise in Brandschutzräumen von
Klimatisierungsanlagen für informationstechnische Einrichtungen zum Einsatz. Ein weiteres bevorzugtes Anwendungsgebiet besteht in der Brand- und/oder Strahlungsabschottung in Kernkraftwerken. In diesem Fall ist denkbar, dass ein wesentlicher Bestandteil der Schutzschieber 11, 12 durch ein strahlungsabsorbierendes Material gebildet ist, beispielsweise ein bleihaltiges Metallgemisch, durch welches eine im Katastrophenfall auftretende ionisierende Strahlung absorbiert wird. Aufgrund der zu erfüllenden hohen Sicherheitsnorm können dabei keine Kompromisse hinsichtlich des hohen Gewichts der Schutzschieber 11, 12 eingegangen werden, sodass eine hochgradige Abschottung gegen jegliche Art von kompromittierender Strahlung gewährleistet ist.

Dabei können eine Mehrzahl von Schutzvorrichtungen 10 entlang der Wandfläche W modulartig nebeneinander angeordnet sein. Mehrere Schutzvorrichtungen 10 können vorteilhaft beliebig nahe nebeneinandergereiht werden, da nur in vertikaler Richtung angeordnete Elemente vorhanden sind, die über die horizontale Breite der Kanalöffnungen 6, 7 nicht oder nur wenig hinausragen.

In einer bevorzugten Ausführungsform einer solchen Schutzwand ist bei einer modulartigen Nebeneinanderreihung von Schutzvorrichtungen 10 ein modulartiges Wandelement 36 zwischen jeweils einer Schutzvorrichtung 10 und der Wand W vorgesehen, wie in Fig. 7 in perspektivischer Ansicht dargestellt ist. Die Oberfläche des Wandelements 36 erstreckt sich im Wesentlichen über die gesamte Längen- und Breitenausdehnung der zugeordneten Schutzvorrichtung 10. Zum Anschluss an die Kanalöffnungen 6, 7 in der Wand W sind bezüglich ihrer Position und Grösse korrespondierende Durchbrüche 37, 38 in jeweils einem Wandelement 36 vorhanden. Bei der Wand W kann es sich beispielsweise um eine Betonwand handeln, während das Wandelement 36 vorzugsweise aus rostfreiem Stahl gebildet ist. Alternativ kann das Wandelement 36 auch ein beliebiges anderes Brandschutzmaterial aufweisen oder beim Einsatz in Kernkraftwerken auch strahlungsabsorbierendes Material umfassen.

Nachfolgend ist die Funktionsweise der beschriebenen Schutzvorrichtung 10 näher erläutert.

Im Normalbetrieb der Klimatisierungsanlage befinden sich die Schutzschieber 11, 12 in der Offenstellung SO. Durch die im oberen Raumbereich angeordneten Zuluftkanäle 6 und die im unteren Raumbereich angeordneten Abluftkanäle 7 wird eine optimale Luftzirkulation ermöglicht.

Im Brandfall der Klimatisierungsanlage sind die unterhalb bzw. oberhalb der Kanalöffnung 6 bzw. 7 angeordneten Schutzschieber 11 bzw. 12 in die Verschlussstellung SV überführbar. Der hierzu benötigte Kraftaufwand wird durch die Aktivierungseinheit 25 zur Verfügung gestellt, in welchem aufgrund eines thermoelektrischen Signals oder aufgrund eines Stromausfalls der Federrücklaufmotor abgeschaltet wird, sodass durch den aktivierten Federrücklauf ein Drehmoment auf die Schwenkachse 19 übertragen wird. Dadurch erfolgt eine Schwenkbewegung der Hebelanordnung 16, deren vertikale Bewegungskomponente an die daran angelenkten Schutzschieber 11, 12 übertragen wird.

Durch die vollständige Abdeckung der Kanalöffnungen 6, 7 durch die Schutzschieber 11, 12, sowie durch deren hochgradig brandisolierende Wirkung, ist in der Verschlussstellung SV ein wirkungsvoller Brandschutz gewährleistet, der gemeinhin übliche Brandschutzvorkehrungen gemäss der Norm EN1047-2 bei weitem übertrifft.

Durch die zwischen den Schutzschiebern 11, 12 angeordnete Hebelanordnung 16 wird das hohe Gewicht jedes der Schutzschieber 11, 12 durch den jeweils anderen Schutzschieber 11, 12 kompensiert. Denn die Gewichtskraft an jeweils einen der Schutzschieber 11, 12 erzeugt eine entgegengerichtete Kraft an dem jeweils anderen der Schutzschieber 11, 12. Derart fungiert jeder der Schutzschieber 11, 12 als Kompensationselement für den anderen Schutzschieber 11, 12. Dabei ist die Schutzschieberanordnung vollkommen ausbalanciert, d. h. die Schutzschieber 11, 12 befinden sich im Wesentlichen im Kräftegleichgewicht.

Somit ist zum Überführen der Schutzschieber in die Verschlussstellung SV und zur Rückführung in die Offenstellung SO nur ein geringer Kraftaufwand aufzubringen, wie er durch einen herkömmlichen Federrücklaufantrieb 25 bereitgestellt werden kann. Durch den geringen aufzubringenden Kraftaufwand ist auch eine hohe Zuverlässigkeit des Aktivierungsmechanismus gewährleistet, wodurch die Brandschutzsicherheit nochmals erhöht wird.

Aus der Beschreibung des bevorzugten Ausführungsbeispiels sind dem Fachmann zahlreiche Abwandlungen zugänglich, ohne den Schutzbereich der Erfindung zu verlassen, der durch die Patentansprüche definiert ist.

So ist beispielsweise zwischen den Schutzschiebern 11, 12 anstelle der Hebelanordnung 16 eine Seilzuganordnung denkbar, durch welche in vorangehend beschriebener Weise durch die Gewichtskraft eines der Schutzschieber 11, 12 eine entgegengesetzt gerichtete Kraft auf dem jeweils anderen der Schutzschieber 11, 12 vermittelt wird. Um die geforderte hohe Funktionssicherheit zu gewährleisten, können beispielsweise strapazierfähige Stahlseile verwendet werden. Dabei kann der Schiebemechanismus 15 eine Mehrzahl von Umlenkrollen umfassen, über welche die Stahlseile geführt sind und derart die Schutzschieber 11, 12 im Notfall durch Ziehen der Stahlseile in die Verschlusstellung SV überführt werden.

Weiterhin muss die Oberfläche der Schutzschieber nicht zwangsläufig einer Rechtecksform entsprechen. Es sind auch runde oder mehreckig ausgebildete Schutzschieber denkbar, die beispielsweise der Querschnittsform eines Lüftungsrohrs nachempfunden sind. Wesentlich ist lediglich eine vollständige wandseitige Abdeckung des Lüftungskanals.

Die erfindungsgemässe Schutzvorrichtung ist ferner bei verschiedenartig postionierten Kanalöffnungen einsetzbar. Neben einem in den oberen Wandbereich mündenden Zuluftkanal und einem in den unteren Wandbereich mündenden Abluftkanal sind beispielsweise auch Kanalöffnungen denkbar, die in der Decke oder im Boden in Wandnähe des Schutzraumes vorhanden sind. Diese sind in der beschriebenen Weise durch die vertikal entlang der Wand verschiebbaren Schutzschieber vollständig abdeckbar.

Zur Gewichtskompensation ist neben einem weiteren Schutzschieber ein beliebig geartetes Gegengewicht denkbar. Durch eine geeignete Hebelanordnung kann das Eigengewicht des Kompensationselements vergleichsmässig gering sein und dennoch zur Kompensation eines Grossteils des Schutzschiebergewichts herangezogen werden.

## Patentansprüche

1. Schutzvorrichtung (10) für Lüftungskanäle, bei welchen mindestens eine Kanalöffnung (6, 7) zur Luftzuführung und/oder -abführung vorgesehen ist, insbesondere zur Brandabschottung von Klimatisierungsräumen für informationstechnische Einrichtungen oder von Tunneln bzw. Tunnelkonstruktionen oder zur Brand- und/oder Strahlungsabschottung in Kernkraftwerken, **gekennzeichnet durch** mindestens einen Schutzschieber (11, 12), der in vertikaler Richtung verschiebbar gelagert ist, und **durch** einen Schiebemechanismus (15), mittels welchem der Schutzschieber (11, 12) von einer Offenstellung (SO) in eine Verschlussstellung (SV) der Kanalöffnung (6, 7) überführbar ist, wobei die Kanalöffnung (6, 7) in der Verschlussstellung (SV) vollständig von dem Schutzschieber (11, 12) abgedeckt ist.

2. Schutzvorrichtung nach Anspruch 1, **gekennzeichnet durch** ein Kompensationselement (11, 12) zur Gewichtskompensation des Schutzschiebers (11, 12), wobei das Gewicht des Kompensationselements (11, 12) mindestens einem Grossteil des Gewichts des Schutzschiebers (11, 12) entspricht.

3. Schutzvorrichtung nach Anspruch 2, **dadurch gekennzeichnet, dass** das Kompensationselement durch einen weiteren Schutzschieber (11, 12) gebildet ist.

4. Schutzvorrichtung nach Anspruch 2 oder 3, **dadurch gekennzeichnet, dass** der Schiebemechanismus (15) eine Hebelanordnung (16) umfasst, welche derart an den Schutzschieber (11, 12) und an das Kompensationselement (11, 12) angelenkt ist, dass durch die auf das Kompensationselement (11, 12) wirkende Gewichtskraft eine in Gegenrichtung wirkende Kraft auf den Schutzschieber (11, 12) verursacht ist.

5. Schutzvorrichtung nach Anspruch 2, **dadurch gekennzeichnet, dass** das Kompensationselement (11, 12) und/oder die Hebelanordnung (16) derart ausgebildet ist, dass jeweils zwischen der Gewichtskraft und der in Gegenrichtung wirkenden Kraft an dem Schutzschieber (11, 12) und an dem Kompensationselement (11, 12) im Wesentlichen ein Kräftegleichgewicht herrscht.

6. Schutzvorrichtung nach Anspruch 4 oder 5, **dadurch gekennzeichnet, dass** die Hebelanordnung (16) mindestens einen Hebel (17, 18) mit einer Schwenkachse (19, 20) aufweist, die zwischen dem Schutzschieber (11, 12) und dem Kompensationselement (11, 12) angeordnet ist, wobei der Schutzschieber (11, 12) eine an jeweils einem Hebelende und das Kompensationselement (11, 12) eine an dem jeweils anderen Hebelende angelenkte Verbindung (27, 28) aufweist.

7. Schutzvorrichtung nach Anspruch 6, **dadurch gekennzeichnet, dass** die Hebelanordnung (16) zwei sich überkreuzende Hebel (17, 18) umfasst.

8. Schutzvorrichtung nach Anspruch 7, **dadurch gekennzeichnet, dass** an der jeweiligen Schwenkachse (19, 20) der Hebel (17, 18) ein Zahnrad (21, 22) vorhanden ist, wobei die Zahnräder (21, 22) gegenseitig ineinandergreifen und somit beim Verschwenken der Hebel (17, 18) zusammenwirken.

9. Schutzvorrichtung nach einem der Ansprüche 4 bis 8, **dadurch gekennzeichnet, dass** der Schiebemechanismus (15) eine auf die Hebelanordnung (16) wirkende Aktivierungseinheit (25) umfasst, die ein Verschwenken der Hebelanordnung (16) im Brandfall verursacht, wodurch der jeweilige Schutzschieber (11, 12) in die Verschlussstellung (SV) überführbar ist.

10. Schutzvorrichtung nach Anspruch 9, **dadurch gekennzeichnet, dass** die Aktivierungseinheit (25) an mindestens einer Schwenkachse (19, 20) der Hebel (17, 18) angreift.

11. Schutzvorrichtung nach Anspruch 9 oder 10, **dadurch gekennzeichnet, dass** die Aktivierungseinheit (25) durch einen Federrücklaufantrieb gebildet ist.

12. Schutzvorrichtung nach einem der Ansprüche 9 bis 11, **dadurch gekennzeichnet, dass** diese zum Überführen des Schutzschiebers (11, 12) von der Offenstellung (SO) in die Verschlussstellung (SV) und zum Rückführen des Schutzschiebers (11, 12) von der Verschlussstellung (SV) in die Offenstellung (SO) derart ausgebildet ist, dass hierzu jeweils nur eine geringe Krafteinwirkung durch die Aktivierungseinheit (25) notwendig ist, die höchstens 50 Nm, vorzugsweise höchstens 15 Nm, beträgt.

13. Schutzvorrichtung nach einem der Ansprüche 1 bis 12, **gekennzeichnet durch** ein Wandelement (36) zur modularen Anordnung an der Wand W, wobei das Wandelement (36) zu den Kanalöffnungen (6, 7) korrespondierende Durchbrüche (37, 38) aufweist.

14. Schutzwand, insbesondere zur Brandabschottung von Klimatisierungsräumen für informationstechnische Einrichtungen oder zur Brand- und/oder Strahlungsabschottung in Kernkraftwerken, **gekennzeichnet durch** mindestens eine Schutzvorrichtung (10) nach einem der Ansprüche 1 bis 13.

15. Schutzwand nach Anspruch 14, **gekennzeichnet durch** einen modularen Aufbau mit einer Mehrzahl von Schutzvorrichtungen (10) nach einem der Ansprüche 1 bis 13.
